# FASCICULE DE BREVET EUROPEEN

(11) **EP 2 756 398 B1**
(45) Date de publication et mention de la délivrance du brevet: **06.05.2020**
(21) Numéro de dépôt: 12773032.3
(22) Date de dépôt: 13.09.2012
(51) Int. Cl.: G06F 9/50

(54) **PROCEDE, DISPOSITIF ET PROGRAMME D'ORDINATEUR POUR ALLOUER DYNAMIQUEMENT DES RESSOURCES D'UN CLUSTER A L'EXECUTION DE PROCESSUS D'UNE APPLICATION**
VERFAHREN, VORRICHTUNG UND COMPUTERPROGRAMM ZUR DYNAMISCHEN RESSOURCENZUWEISUNG EINER GRUPPE ZUR DURCHFÜHRUNG VON ANWENDUNGSPROZESSEN
METHOD, DEVICE AND COMPUTER PROGRAM FOR DYNAMICALLY ALLOCATING RESOURCES OF A CLUSTER TO THE EXECUTION OF PROCESSES OF AN APPLICATION

(30) Priorité: 13.09.2011 FR 1158113
(43) Date de publication de la demande: 23.07.2014
(73) Titulaire: Bull SAS, 78340 Les Clayes-sous-Bois (FR)
(72) Inventeur: ROSSE-LAURENT, Pascale, F-38320 Eybens (FR)
(74) Mandataire: Santarelli
(86) Numéro de dépôt international: PCT/FR2012/052047
(87) Numéro de publication internationale: WO 2013/038112

(56) Documents cités:
- US-A1- 2008 209 423
- MARK STILLWELL ET AL: "Dynamic fractional resource scheduling for HPC workloads", PARALLEL&DISTRIBUTED PROCESSING (IPDPS), 2010 IEEE INTERNATIONAL SYMPOSIUM ON, IEEE, PISCATAWAY, NJ, USA, 19 avril 2010 (2010-04-19), pages 1-12, XP031679752, ISBN: 978-1-4244-6442-5
- HUANG WEI ET AL: "A case for high performance computing with virtual machines", INTERNATIONAL CONFERENCE ON SUPERCOMPUTING, CONFERENCEPROCEEDINGS, ACM, NEW YORK, US, 28 juin 2006 (2006-06-28), pages 125-134, XP002477591,
- Cristian Klein ET AL: "An RMS for Non-predictably Evolving Applications", INRIA - Rapport de recherche N° 7644 - version 3, 9 juin 2011 (2011-06-09), pages 1-28, XP055030390, Extrait de l'Internet: URL:http://hal.inria.fr/docs/00/59/94/27/P DF/main.good.pdf [extrait le 2012-06-19]
- NIELS FALLENBECK ET AL: "Xen and the Art of Cluster Scheduling", VIRTUALIZATION TECHNOLOGY IN DISTRIBUTED COMPUTING, 2006. VTDC 2006. F IRST INTERNATIONAL WORKSHOP ON, IEEE, PI, 1 novembre 2006 (2006-11-01), pages 4-4, XP031132662, ISBN: 978-0-7695-2873-1
- MÃ RCIA C CERA ET AL: "Scheduling Dynamically Spawned Processes in MPI-2", 26 juin 2006 (2006-06-26), JOB SCHEDULING STRATEGIES FOR PARALLEL PROCESSING; [LECTURE NOTES IN COMPUTER SCIENCE;;LNCS], SPRINGER BERLIN HEIDELBERG, BERLIN, HEIDELBERG, PAGE(S) 33 - 46, XP019077636, ISBN: 978-3-540-71034-9 abrégé pages 34-36, aliéna "2 Dynamic Creation of Processes" pages 36-40, alinéa "3 A Scheduler for MPI-2 Programs"; figures 1,2
- JEREMY B UISSON ET AL: "Scheduling malleable applications in multicluster systems", CLUSTER COMPUTING, 2007 IEEE INTERNATIONAL CONFERENCE ON, IEEE, PISCATAWAY, NJ, USA, 17 septembre 2007 (2007-09-17), pages 372-381, XP031324113, ISBN: 978-1-4244-1387-4
- JEREMY BUISSON ET AL: "Supporting adaptable applications in grid resource management systems", GRID COMPUTING, 2007 8TH IEEE/ACM INTERNATIONAL CONFERENCE ON, IEEE, PI, 1 septembre 2007 (2007-09-01), pages 58-65, XP031151227, ISBN: 978-1-4244-1559-5
- Marcia C. CERA ET AL: "Supporting Malleability in Parallel Architectures with Dynamic CPUSETs Mapping and Dynamic MPI", 3 January 2010 (2010-01-03), DISTRIBUTED COMPUTING AND NETWORKING, SPRINGER BERLIN HEIDELBERG, BERLIN, HEIDELBERG, XP019137948, ISBN: 978-3-642-11321-5 pages 242-257, * Section 5 "Conclusions and Future Works"; page 256, line 1 - line 27 * * Section 3.2 "Dynamic MPI requirements"; page 246 - page 247; figure 2 * * Dynamic MPI Tests; page 248, line 23 - line 31 * * Section 4.2 "Malleability on a cluster with dynamic MPI"; page 251 - page 253 * * section 4.3 "Improving Resources Utilization Using Malleability"; page 254 - page 255 *

## Description

La présente invention concerne l'allocation de ressources d'un cluster à l'exécution d'applications et plus particulièrement un procédé, un dispositif et un programme d'ordinateur pour allouer dynamiquement des ressources d'un cluster à l'exécution de processus d'une application.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en œuvre sur des systèmes de traitement de données appelés clusters. Un cluster comprend typiquement un ensemble de nœuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en œuvre un système d'exploitation tel que Linux (Linux est une marque). La connexion entre les nœuds est réalisée à l'aide de liens de communication, par exemple Ethernet ou Infiniband (Ethernet et Infiniband sont des marques).

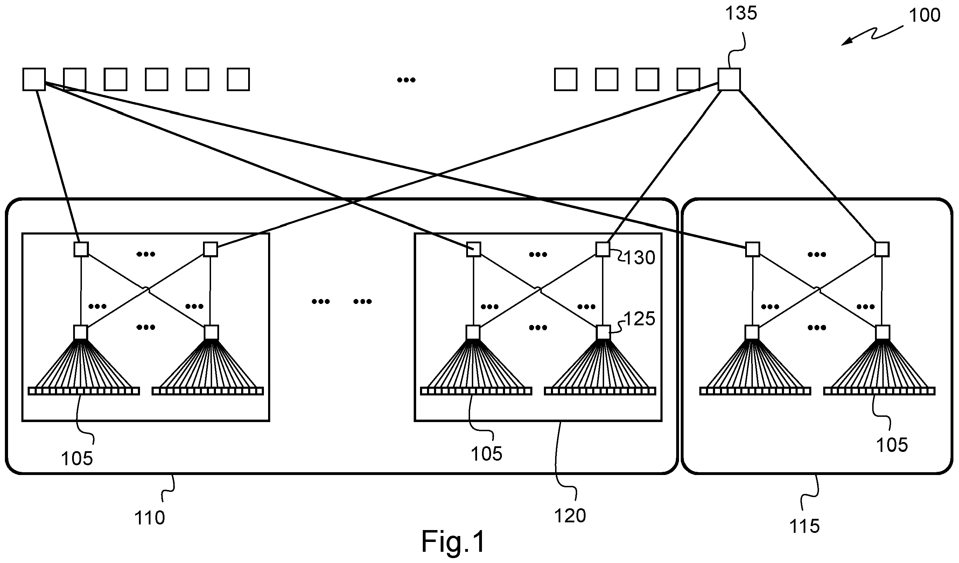

La figure 1 illustre schématiquement un exemple d'une topologie 100 d'un cluster, de type *fat-tree.* Ce dernier comprend un ensemble de nœuds génériquement référencés 105. Les nœuds appartenant à l'ensemble 110 sont ici des nœuds de calcul tandis que les nœuds de l'ensemble 115 sont des nœuds de service (nœuds de stockage et nœuds d'administration). Les nœuds de calcul peuvent être regroupés en sous-ensembles 120 appelés îlots de calcul, l'ensemble 115 étant appelé îlot de service.

Les nœuds sont reliés les uns aux autres par des commutateurs (appelés *switch* en terminologie anglo-saxonne), par exemple de façon hiérarchique. Dans l'exemple illustré sur la figure 1, les nœuds sont connectés à des commutateurs 125 de premier niveau qui sont eux-mêmes reliés à des commutateurs 130 de deuxième niveau qui sont à leur tour reliés à des commutateurs 135 de troisième niveau.

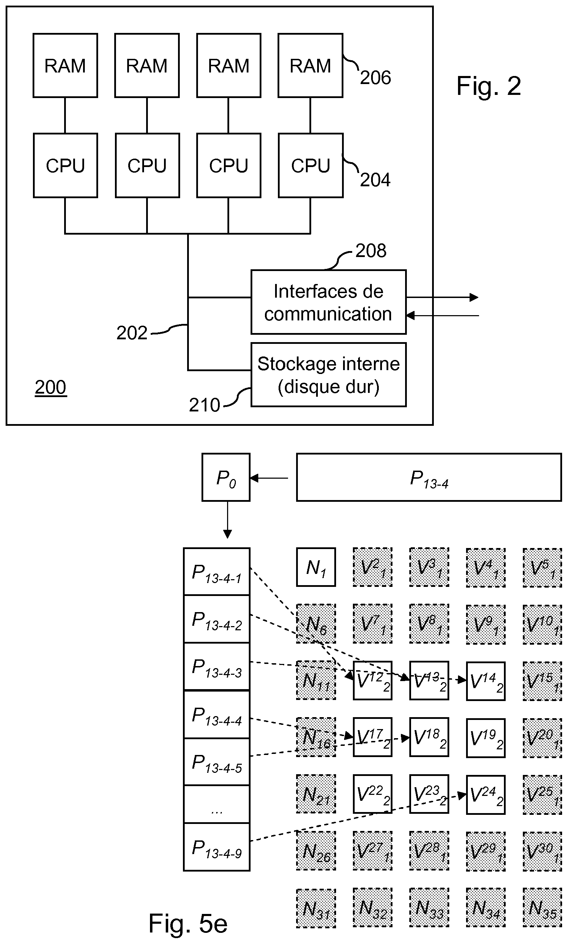

Comme illustré sur la figure 2, chaque nœud comprend généralement un ou plusieurs microprocesseurs, des mémoires locales ainsi qu'une interface de communication. Plus précisément, le nœud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le nœud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le nœud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Il est observé qu'un cluster est généralement utilisé pour exécuter simultanément plusieurs applications, chaque application comprenant plusieurs processus. Une opération importante consiste en l'allocation des ressources, par exemple des nœuds, à chaque application et, au sein de chaque application, à chaque processus. A ces fins, il existe des algorithmes, généralement appelés *batch scheduler* en terminologie anglo-saxonne, dont le rôle est double. D'une part, ils reçoivent d'utilisateurs des requêtes représentatives de demandes d'exécutions d'applications. Ces requêtes (ou commandes de soumission) peuvent être formalisées et comprendre des indications de quantités et de répartitions des ressources nécessaires à l'exécution des applications à exécuter. D'autre part, les *batch schedulers* surveillent la disponibilité des ressources afin d'affecter les ressources disponibles de façon optimisée (gestion de priorité) aux demandes d'exécution en attente. Lorsque les ressources suffisantes sont disponibles pour l'exécution d'une application et que cette dernière est prioritaire, les ressources sont alors dédiées à l'exécution de cette application jusqu'à ce que son exécution soit totalement terminée. La durée d'allocation et la quantité de ressources allouées à l'application sont donc constantes de son démarrage à sa complétion.

Les algorithmes d'allocation utilisés sont généralement efficaces pour des applications ayant des besoins, en termes de ressources, pouvant être facilement estimées. Cependant, il existe des applications pour lesquelles les besoins de ressources nécessaires à l'exécution de chaque processus varient au cours du temps. Ainsi, à titre d'illustration, dans une application de simulation de crash de voitures, des processus sont généralement associés à différentes parties d'une voiture pour estimer les déformations de ces parties. Il en résulte que, lors du crash, si une partie d'une voiture ne se déforme que légèrement, le volume de calcul lié à ces déformations est plus faible que celui lié à une partie se déformant davantage. En outre, pour les parties se déformant de façon importante, il est généralement nécessaire d'affiner les premières estimations, par exemple en utilisant un modèle plus précis de ces parties (les différentes parties sont typiquement modélisées à l'aide de modèles filaires dont la précision est notamment liée à un pas de quadrillage).Ce phénomène illustre une dissymétrie de besoins qui demande, dans l'absolu, de renforcer la puissance de calcul des processus en charge de la déformation.

Ainsi, certains processus peuvent, au cours de l'exécution d'une application, nécessiter davantage de ressources que celles qui leurs sont allouées, ou être à l'origine de nouveaux processus nécessitant des ressources pour être exécutés, alors que des ressources allouées à d'autres processus peuvent être suffisantes, voir excessives.

Cependant, la réallocation de ressources en cours d'exécution de processus, ou allocation dynamique de ressources, est généralement complexe à mettre en œuvre au niveau de l'algorithme d'allocation utilisé. En effet l'objectif d'un *batch scheduler* est de savoir allouer l'ensemble des ressources à différentes requêtes applicatives. Un cluster bien géré n'a donc aucune ressource disponible pour subvenir « à la demande » à une requête de demande de compléments de ressources pour une application en cours d'exécution. En outre, cette requête, si elle était traitée, serait assez pénalisante, notamment en termes de temps, car il faudrait attendre la disponibilité de ressources et donc retarder la fin d'exécution de l'application. Le document de l'art antérieur, "Supporting malleability in parallel architectures with dynamic CPUSETs mapping and dynamic MPI" par Marcia Cera, Yiannis Georgiou, Olivier Richard, Nicolas Maillard, Philippe Olivier Alexandre Navaux (3 janvier 2010, Proceedings of International Conférence Distributed Computing and Networking 2010, pages 242-257, SPRINGER, Berlin, Heidelberg, ISBN: 978-3-642-11321-5), se rapporte à des techniques de gestion de resources pour applications malléables. Ce document enseigne d'utiliser le MPI processes spawning afin de créer, si des noeuds du cluster redeviennent disponibles, de nouveaux processus pour une application MPI malléable en cours d'exécution. L'invention permet de résoudre au moins un des problèmes exposés précédemment.

L'invention a ainsi pour objet un procédé pour allouer dynamiquement au moins une ressource d'une pluralité de ressources d'un ensemble de ressources d'un cluster, les ressources de ladite pluralité de ressources étant réservées pour l'exécution de processus d'une application et lesdites ressources étant des nœuds dudit cluster, ce procédé étant caractérisé en ce qu'il comprend les étapes suivantes,
- création d'au moins une machine virtuelle dans au moins une ressource dudit ensemble de ressources suite à la réservation des ressources dudit ensemble de ressource, ladite au moins une machine virtuelle créée offrant des caractéristiques similaires à celles de ladite au moins une ressource ;
- création d'un indicateur associé à ladite au moins ressource pour laquelle au moins une machine virtuelle a été créée, ledit indicateur permettant d'indiquer qu'une machine virtuelle de ladite au moins ressource a été utilisée ; 1
- identification d'au moins un processus en cours d'exécution de ladite application, ledit au moins un processus pouvant être démultiplié en au moins un autre processus, un seuil prédéterminé étant spécifié pour ledit processus pouvant être démultiplié, ledit seuil correspondant au nombre de nœuds nécessaires pour démultiplier ledit processus en cours d'exécution identifié ;
- identification parmi lesdites ressources réservées d'au moins une ressource disponible comprenant au moins une machine virtuelle créée non utilisée, ladite identification étant effectuée sur la base dudit indicateur associé à chacune desdites ressources pour lesquelles au moins une machine virtuelle a été créée et,
- démultiplication dudit au moins un processus pouvant être démultiplié, dans lequel ladite démultiplication consiste à décomposer un processus en nouveaux processus, créant ainsi un ou plusieurs nouveaux processus, et au moins un des nouveaux processus résultant de ladite démultiplication étant exécuté par une machine virtuelle créée non utilisée de ladite au moins une ressource identifiée,
dans lequel, l'étape d'identification d'au moins un processus pouvant être démultiplié comprend les étapes suivantes :
- calcul d'un nombre de ressources disponibles parmi lesdites ressources réservées ayant au moins une machine virtuelle non utilisée, et
- comparaison dudit nombre de ressources avec un seuil, ladite étape de démultiplication étant effectuée en réponse à ladite comparaison,
le procédé comprenant en outre une étape de mise à jour dudit indicateur associé à ladite au moins une ressource identifiée pour indiquer qu'une machine virtuelle de ladite au moins une ressource identifiée est utilisée pour exécuter un des nouveaux processus résultant de ladite démultiplication dudit processus identifié.

Le procédé selon l'invention permet ainsi de ré-équilibrer l'exécution d'une application sur les ressources qui lui ont été allouées sans nécessiter de ressources complémentaires (c'est-à-dire modifier la distribution de l'exécution de processus au sein d'un ensemble de ressources données selon un critère donné). Le procédé selon l'invention permet donc d'améliorer l'utilisation des ressources d'un cluster, en particulier pour l'exécution d'applications présentant des phases d'exécution dissymétriques ou variables, et évite l'allocation inutile de ressources pour anticiper un éventuel besoin de ressources complémentaires. Le procédé selon l'invention permet en outre de conserver le mode de fonctionnement standard des *batch schedulers.*

Il est ainsi possible de déterminer facilement les ressources disponibles pouvant être utilisées pour l'exécution de nouveaux processus.

Le procédé selon l'invention permet ainsi de contrôler l'allocation dynamique de ressources en fonction des ressources disponibles pour éviter une réallocation qui serait plus couteuse, en particulier en termes de temps de traitement, qu'une absence de réallocation.

Ledit nombre de ressources disponibles est, par exemple, déterminé en fonction dudit indicateur et du nombre de machines virtuelles créées dans ladite au moins une ressource identifiée.

Le procédé est, par exemple, mis en œuvre dans un processus maître de ladite application.

Toujours selon un mode de réalisation particulier, lesdites étapes d'identification d'au moins un processus pouvant être démultiplié, d'identification d'au moins une ressource disponible et de démultiplication sont effectuées en réponse à une requête, par exemple une requête de raffinement de calculs.

L'invention a également pour objet un programme d'ordinateur comprenant des instructions adaptées à la mise en œuvre de chacune des étapes du procédé décrit précédemment lorsque ledit programme est exécuté sur un ordinateur ainsi qu'un dispositif comprenant des moyens adaptés à la mise en œuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un nœud d'un cluster ;
- la figure 3 illustre schématiquement un exemple d'algorithme mettant en œuvre l'invention pour allouer dynamiquement des ressources lors de l'exécution d'une application ;
- la figure 4 illustre un exemple d'algorithme pour calculer un nombre de nœuds dont l'exécution des processus associés est terminée et ayant chacun au moins une machine virtuelle n'ayant pas été utilisée ; et,
- la figure 5, comprenant les figures 5a à 5e, décrit un exemple de mise en œuvre des algorithmes décrits en référence aux figures 3 et 4.

De façon générale, l'invention permet d'optimiser l'utilisation de ressources allouées à l'exécution d'une application, dans un cluster, au cours de son exécution, afin de tenir compte de l'utilisation effective des ressources allouées aux processus de cette application et, le cas échéant, de l'apparition de nouveaux processus.

Comme observé ci-avant, il existe des applications, appelées dans la suite de la description applications malléables, ayant apparemment besoin d'accroître le périmètre de leurs ressources au cours de leur exécution. Cependant, il a été observé que, généralement, les requêtes émises par ces applications pour obtenir davantage de ressources n'étaient que partiellement justifiées. En effet, si certains processus ont effectivement besoin de ressources supplémentaires, certaines autres ressources allouées à l'application ne sont pas utilisées ou sont sous-utilisées. Pour faciliter la gestion de l'utilisation d'un cluster exécutant plusieurs applications simultanément, il est donc préférable d'allouer dynamiquement les ressources utilisées par une application aux processus de cette application plutôt que d'allouer de nouvelles ressources. Une telle allocation dynamique (ou réallocation) est ici effectuée selon les besoins des processus de l'application considérée et/ou la création de nouveaux processus dans cette application.

Il est observé ici que l'allocation de ressources est généralement effectuée en utilisant des identifiants des ressources, chaque ressource ayant un seul identifiant. Ainsi, il est possible d'associer un nœud de calcul donné à un processus donné d'une application donnée. Il est également observé qu'une application à laquelle est alloué un nœud en reste généralement propriétaire même si le processus exécuté sur ce nœud est terminé. En effet, tous les nœuds ne sont en général libérés et ne peuvent être réutilisés que lorsque l'exécution de l'application est terminée.

L'invention vise ainsi à associer plusieurs identifiants à une même ressource, de façon artificielle, de telle sorte que cette ressource utilisée sous un premier identifiant puisse être réutilisée sous un deuxième identifiant lorsqu'elle n'est plus ou peu utilisée en lien avec le premier identifiant.

Selon un mode de réalisation particulier, une ou plusieurs machines virtuelles sont lancées sur des nœuds alloués à une application particulière, par exemple une application malléable, lors de l'allocation de ressources à cette application. Il est rappelé ici que, selon une acceptation courante, une machine virtuelle peut être considérée comme un environnement d'exécution. Ainsi, en créant une ou plusieurs machines virtuelles sur un nœud, plusieurs environnements d'exécution distincts liés au nœud sont disponibles, l'un lié au nœud lui-même et un ou plusieurs autres liés à la ou aux machines virtuelles créées dans ce nœud.

En d'autres termes, l'utilisation de machines virtuelles augmente artificiellement le nombre de ressources allouées à une application. Ces ressources virtuelles supplémentaires sont utilisées durant l'exécution d'une application pour suppléer au besoin de ressources complémentaires (les machines virtuelles auxquelles sont affectées de nouvelles phases d'exécution, c'est-à-dire de nouveaux processus, appartiennent à des nœuds ayant terminé en avance une première phase de calcul de l'application).

Les machines virtuelles créées ne sont pas utilisées dans un premier temps mais seulement lorsque des nœuds ne sont plus utilisés et que des nouveaux processus doivent être exécutés selon, par exemple, une technique connue sous le nom de *spawning* qui consiste à démultiplier ou décomposer un processus pour affiner le résultat de l'opération associée. Une telle démultiplication permet, par exemple, d'affiner le maillage dans une application de calculs de déformations telle que présentée précédemment.

Le nombre de machines virtuelles créées par nœud est ici liée au nombre de démultiplications ou décompositions envisagées.

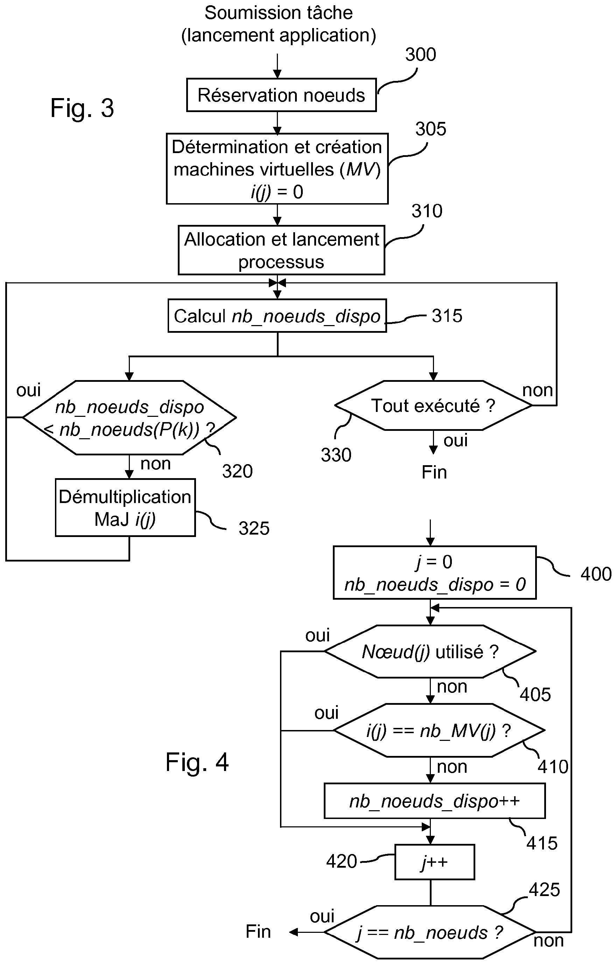

La figure 3 illustre schématiquement un exemple d'algorithme mettant en œuvre l'invention pour allouer dynamiquement des ressources lors de l'exécution d'une application.

L'algorithme représenté ici est appelé lorsqu'une tâche est soumise, c'est-à-dire lorsqu'une application doit être exécutée avec un ensemble de données particulier.

Dans une première étape, des nœuds du cluster utilisé sont réservés pour l'application considérée (étape 300). Les nœuds sont ici réservés de façon classique par un module de type *batch scheduler* qui identifie les ressources requises par l'application ainsi que les ressources disponibles afin d'allouer des ressources à celle-ci c'est-à-dire, notamment, réserver des nœuds pour l'exécution de l'application. Le nombre de nœuds nécessaires peut, en particulier, être défini par un niveau de maillage initial prédéfini.

Il est observé ici qu'un nœud particulier, appelé nœud maître, est utilisé par un processus maître. Ce dernier a notamment pour objet de contrôler l'exécution des autres processus.

Dans une étape suivante (étape 305), des machines virtuelles, notées MV, sont déterminées et créées. Selon un mode de réalisation particulier, le nombre de machines virtuelles créées est le même pour chaque nœud alloué. Alternativement, un nombre de machines virtuelles *nb_MV(j)* peut être défini pour chaque nœud *j.* Le nombre de machines virtuelles associées à un nœud donné est par exemple déterminé par le nombre de démultiplications autorisées et, éventuellement, par le nombre de processus devant être exécutés en parallèle. Ce nombre peut également être défini ou corrigé en fonction des caractéristiques du nœud considéré. Il peut aussi être prédéfini par un utilisateur.

Bien entendu, une définition plus précise peut être utilisée pour limiter le nombre de nœuds dans lesquels des machines virtuelles sont créées ou pour autoriser le traitement parallèle de plusieurs démultiplications de processus sur plusieurs ensembles de nœuds, chaque ensemble permettant l'exécution de processus résultants d'une démultiplication.

Une variable *i(j)* est initialisée à la valeur zéro. Cette variable représente ici le nombre de machines virtuelles utilisées sur chaque nœud *j* réservé.

Les nœuds réservés sont alors alloués aux processus devant être exécutés et ces derniers sont lancés (étape 310). A ces fins, la décomposition de l'application en processus est exécutée, de façon standard, par le processus maître, selon le nombre de nœuds réservés à l'application, chaque processus résultant étant exécuté sur un nœud selon la distribution effectuée par le processus maître.

Le processus maître reçoit les complétions, c'est-à-dire qu'il est averti de la fin d'exécution de chaque processus. Le processus maître peut ainsi calculer un nombre de nœuds disponibles, réservés à l'application, dont au moins une machine virtuelle n'a pas été utilisée (étape 315), noté *nb_nœuds_dispo.* Un exemple d'un tel calcul est décrit en référence à la figure 4.

Par ailleurs, le processus maître peut également décomposer des sous-problèmes non terminés, c'est-à-dire démultiplier un ou plusieurs processus en cours d'exécution.

Pour déterminer si un ou plusieurs processus peuvent être démultipliés, le processus maître compare le nombre de nœuds dont l'exécution des processus associés est terminée et ayant chacun au moins une machine virtuelle n'ayant pas été utilisée (*nb_nœuds_dispo*) avec un ou plusieurs seuils prédéterminés, noté ici *nb_noeuds(P(k)).* Le seuil *nb_noeuds(P(k))* correspond ici au nombre de nœuds nécessaires pour démultiplier le processus *P* exécuté sur le nœud *k.* Un tel seuil peut être commun à tous les processus ou non.

Si au moins un processus peut être démultiplié (étape 320), c'est-à-dire s'il existe un processus *P* exécuté par un nœud *k* tel que *nb_nœuds_dispo* ≥ *nb_noeuds(P(k)),* ce processus est démultiplié. A ces fins, le processus maître démultiplie, de façon classique, ce processus en plusieurs processus qui sont chacun assignés à une machine virtuelle d'un nœud non utilisé (étape 325) où ils sont exécutés.

La valeur de la variable *i(j)* est mise à jour en conséquence (la valeur de la variable *i(j)* est incrémentée de un pour chaque nœud *j* auquel est assigné un processus résultant de la démultiplication.

L'algorithme reboucle alors à l'étape 315 pour déterminer si d'autres processus peuvent être démultipliés.

Parallèlement, un test est effectué pour déterminer si l'application a été entièrement exécutée ou non, c'est-à-dire pour déterminer si tous ses processus ont été exécutés (étape 330). Dans l'affirmative, il est mis fin à l'algorithme. Dans le cas contraire, l'algorithme se poursuit en tentant de démultiplier des processus, c'est-à-dire en rebouclant à l'étape 315.

Selon un mode de réalisation particulier, les étapes 315 à 330 ne sont exécutées, le cas échéant, qu'après avoir reçu une requête visant l'allocation de nouvelles ressources pour l'exécution de processus. Une telle requête est, par exemple, une requête de raffinement de calculs, notamment une requête de raffinement de maillage.

La figure 4 illustre un exemple d'algorithme pour calculer un nombre de nœuds dont l'exécution des processus associés est terminée et ayant chacun au moins une machine virtuelle n'ayant pas été utilisée.

Une première étape (étape 400) a ici pour objet l'initialisation à la valeur zéro de la variable *j* représentant un index sur les nœuds d'un cluster réservés à l'exécution d'une application particulière et de la variable *nb_nœuds_dispo* représentant le nombre cherché de nœuds dont l'exécution des processus associés est terminée et ayant chacun au moins une machine virtuelle n'ayant pas été utilisée.

Dans une étape suivante (étape 405), un test est effectué pour déterminer si le nœud ayant l'index *j* est utilisé, c'est-à-dire si le processus exécuté par ce nœud est terminé. Comme indiqué précédemment, cette information est généralement reçue par un processus maître.

Si le nœud ayant l'index *j* n'est pas utilisé, un autre test est effectué pour déterminer si toutes les machines virtuelles créées pour ce nœud ont été utilisées (étape 410). Ce test peut notamment consister à comparer le nombre de machines virtuelles utilisées par le nœud considéré, représenté par la variable *i(j)*, avec le nombre de machines virtuelles (*nb_MV(j)*) créées pour ce nœud.

Si au moins une machine virtuelle de ce nœud n'a pas été utilisée, le nombre cherché de nœuds dont l'exécution des processus associés est terminée et ayant chacun au moins une machine virtuelle n'ayant pas été utilisée (*nb_nœuds_dispo*) est incrémenté de un (étape 415).

Si le nœud ayant l'index *j* est utilisé, si toutes les machines virtuelles créées pour ce nœud ont été utilisées ou après avoir incrémenté de un le nombre cherché de nœuds dont l'exécution des processus associés est terminée et ayant chacun au moins une machine virtuelle n'ayant pas été utilisée, la valeur de la variable *j* est incrémentée de un (étape 420).

Un test est alors effectué (étape 425) pour déterminer si la variable *j* est égale au nombre de nœuds réservés pour l'application considérée (moins au moins le nœud maître). Dans l'affirmative, il est mis fin à l'algorithme. Dans le cas contraire, les étapes précédentes (étapes 405 à 425) sont répétées.

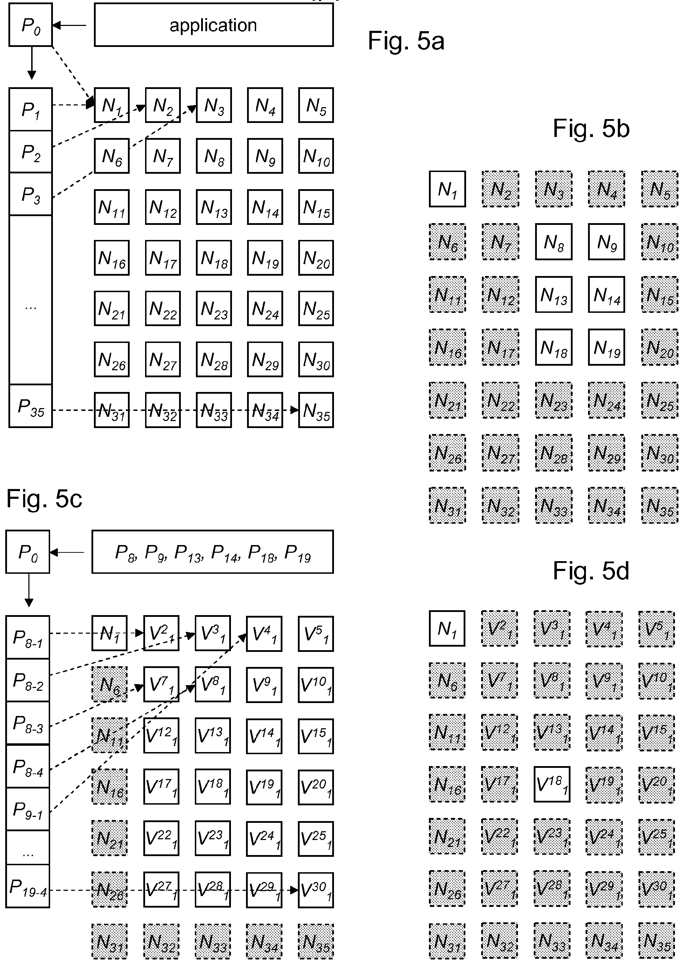

La figure 5, comprenant les figures 5a à 5e, décrit un exemple de mise en œuvre des algorithmes décrits en référence aux figures 3 et 4.

La figure 5a illustre schématiquement la décomposition d'une application en plusieurs processus et l'assignation de ces processus à chaque nœud d'un ensemble de 35 nœuds préalablement réservés pour l'exécution d'une application donnée, référencés de *N₁* à *N₃₅.*

Le processus maître (noté *P₀*) est ici assigné au nœud *N₁* comme illustré à l'aide de la flèche en trait pointillé joignant le processus *P₀* au nœud *N₁.*

Ce processus est notamment utilisé pour décomposer le problème à résoudre par l'application en plusieurs processus, de préférence en autant de processus qu'il y a de nœuds réservés à l'application. Ainsi, le processus maître *P₀* décompose l'application en 35 processus, notés *P₁* à *P₃₅*, et assigne ces processus aux nœuds réservés. Ainsi, le processus *P₁* est assigné au nœud *N₁*, le processus *P₂* au nœud *N₂* et ainsi de suite, comme illustré à l'aide des flèches en trait pointillé.

Il est observé ici que suite à la réservation des 35 nœuds, des machines virtuelles ont été déterminées et créées sur chaque nœud réservé. Ici, deux machines virtuelles sont créées dans chaque nœud. Dans un premier temps, ces machines virtuelles ne sont pas utilisées.

Le processus maître reçoit les complétions des processus. Ainsi, à titre d'illustration, à un instant donné, le processus maître est informé que les processus assignés aux nœuds *N₂* à *N₇, N₁₀* à *N₁₂*, *N₁₅* à *N₁₇* et *N₂₀* à *N₃₅* sont exécutés et que ces nœuds sont disponibles.

La figure 5b illustre un tel exemple de statut des nœuds *N₁* à *N₃₅*, les nœuds grisés ayant des bords en trait pointillé représentant ici des nœuds disponibles. Les nœuds grisés ayant des bords en trait pointillé peuvent ainsi être utilisés par des processus toujours en exécution, par exemple des processus liés à des opérations nécessitant un raffinement de maillage. Ainsi, selon cet exemple, les processus *P₈*, *P₉*, *P₁₃*, *P₁₄*, *P₁₈* et *P₁₉*, associés aux nœuds *N₈*, *N₉*, *N₁₃*, *N₁₄*, *N₁₈* et *N₁₉*, respectivement, peuvent être démultipliés pour optimiser l'utilisation des noeuds réservés à l'application considérée en utilisant des machines virtuelles créées dans les nœuds disponibles.

Conformément à des algorithmes tels que ceux décrits en référence aux figures 3 et 4, il est possible, à l'aide du processus maître *P₀*, de démultiplier les processus *P₈*, *P₉*, *P₁₃*, *P₁₄*, *P₁₈* et *P₁₉.* Dans un souci de clarté, chacun de ces processus est ici démultiplié en quatre processus. Ainsi, par exemple, le processus *P₈* est démultiplié en quatre processus notés *P₈₋₁*, *P₈₋₂*, *P₈₋₃* et *P₈₋₄.*

Chacun de ces processus est alors assigné à un nœud disponible ayant une machine virtuelle n'ayant pas encore été utilisée ou un nœud associé à un processus d'où résulte les processus résultants de la démultiplication et ayant une machine virtuelle n'ayant pas encore été utilisée. Ainsi, les processus résultant de la démultiplication des processus *P₈*, *P₉*, *P₁₃*, *P₁₄*, *P₁₈* et *P₁₉* peuvent être exécutés par des machines virtuelles créées dans les nœuds *N₂* à *N₅*, *N₇* à *N₁₀*, *N₁₂* à *N₁₅*, *N₁₇* à *N₂₀*, *N₂₂* à *N₂₅* et *N₂₇* à *N₃₀*. Ainsi, par exemple, le processus *P₈₋₁* peut être assigné à la machine virtuelle *V²₁* du nœud *N₂*, comme illustré sur la figure 5c. De même, le processus *P₈₋₂* peut être assigné à la machine virtuelle *V³₁* du nœud *N₃*, le processus *P₈₋₃* à la machine virtuelle *V7₁* du nœud *N₇* et le processus *P₈₋₄* peut être assigné à la machine virtuelle *V⁸₁* du nœud *N₈*. Comme illustré, les processus *P₉₋₁* à *P₉₋₄*, *P₁₃₋₁* à *P₁₃₋₄*, *P₁₄₋₁* à *P₁₄₋₄*, *P₁₈₋₁* à *P₁₈₋₄* et *P₁₉₋₁* à *P₁₉₋₄* peuvent être assignés de façon similaire.

A la fin de cette procédure d'assignation, tous les nœuds sont utilisés, à l'exception des nœuds *N₆*, *N₁₁*, *N₁₆*, *N₂₁*, *N₂₆* et *N₃₁* à *N₃₅*, comme illustré sur la figure 5c.

A nouveau, le processus maître reçoit les complétions des processus. Ainsi, à titre d'illustration, à un instant donné, le processus maître est informé que seuls le processus maître et le processus assigné à la machine virtuelle *V¹⁸₁* du nœud *N₁₈* sont en cours d'exécution et que, par conséquent, les autres nœuds sont libres, comme illustré sur la figure 5d.

Une démultiplication peut alors être effectuée sur le processus *P₁₃₋₄* assigné à la machine virtuelle *V¹⁸₁* du nœud *N₁₈*.

Comme illustré sur la figure 5e, le processus *P₁₃₋₄* peut être démultiplié en 9 processus P13-4-1 à P13-4-9 qui peuvent être assignés à des machines virtuelles n'ayant pas encore été utilisées des nœuds *N₁₂* à *N₁₄*, *N₁₇* à *N₁₉* et *N₂₂* à *N₂₄*, ici les machines virtuelles *V¹²₂*, *V¹³₂*, *V¹⁴₂*, *V¹⁷₂*, *V¹⁸₂*, *V¹⁹₂*, *V²²₂*, *V²³₂* et *V²⁴₂.*

Ainsi, en associant plusieurs identifiants à une même ressource, par exemple en utilisant des machines virtuelles dans un nœud, il est possible de réutiliser cette ressource (sans que de nouvelles ressources, par exemple de nouveaux nœuds, soient affectées à l'application considérée).

Il est noté ici que si, pour des raisons d'illustration, la description qui précède vise la réallocation de nœuds réservés non utilisés, l'invention n'est pas limitée aux nœuds mais peut être mise en œuvre avec d'autres ressources d'un cluster, par exemple des ressources de stockage.

Naturellement, pour satisfaire des besoins spécifiques, une personne compétente dans le domaine de l'invention pourra appliquer des modifications dans la description précédente.

## Revendications

1. Procédé pour allouer dynamiquement au moins une ressource d'un ensemble de ressources d'un cluster, les ressources dudit ensemble de ressources étant réservées pour l'exécution de processus d'une application et lesdites ressources sont des nœuds dudit cluster, ce procédé étant **caractérisé en ce qu'**il comprend les étapes suivantes,
- création (305) d'au moins une machine virtuelle dans au moins une ressource dudit ensemble de ressources suite à la réservation des ressources dudit ensemble de ressource, ladite au moins une machine virtuelle créée offrant des caractéristiques similaires à celles de ladite au moins une ressource ;
- création d'un indicateur associé à ladite au moins une ressource pour laquelle au moins une machine virtuelle a été créée, ledit indicateur permettant d'indiquer qu'une machine virtuelle de ladite au moins ressource a été utilisée ;
- identification d'au moins un processus en cours d'exécution de ladite application, ledit au moins un processus pouvant être démultiplié en au moins un autre processus, un seuil prédéterminé étant spécifié pour ledit processus pouvant être démultiplié, ledit seuil correspondant au nombre de nœuds nécessaires pour démultiplier le processus en cours d'exécution ;
- identification parmi lesdites ressources réservées d'au moins une ressource disponible comprenant au moins une machine virtuelle créée non utilisée, ladite identification étant effectuée sur la base dudit indicateur associé à chacune desdites ressources pour lesquelles au moins une machine virtuelle a été créée ; et,
- démultiplication (325) dudit au moins un processus pouvant être démultiplié ;
dans lequel ladite démultiplication (325) consiste à décomposer un processus en nouveaux processus, créant ainsi un ou plusieurs nouveaux processus, et au moins un des nouveaux processus résultant de ladite démultiplication étant exécuté par une machine virtuelle créée non utilisée de ladite au moins une ressource identifiée,
l'étape d'identification d'au moins un processus pouvant être démultiplié comprenant les étapes suivantes :
- une étape de calcul (315) d'un nombre de ressources disponibles parmi lesdites ressources réservées ayant au moins une machine virtuelle non utilisée, et
- une étape de comparaison (320) dudit nombre de ressources avec le seuil prédéterminé spécifié pour ledit au moins un processus pouvant être démultiplié, ladite étape de démultiplication étant effectuée en réponse à ladite comparaison,
le procédé comprenant en outre une étape de mise à jour (325) de l'indicateur associé à ladite au moins une ressource identifiée pour indiquer qu'une machine virtuelle de ladite au moins une ressource identifiée est utilisée pour exécuter un des nouveaux processus résultant de ladite démultiplication dudit processus identifié.

2. Procédé selon la revendication 1 selon lequel ledit nombre de ressources disponibles est déterminé en fonction dudit indicateur et du nombre de machines virtuelles créées dans ladite au moins une ressource identifiée.

3. Procédé selon l'une quelconque des revendications précédentes selon lequel ledit procédé est mis en œuvre dans un processus maître de ladite application.

4. Procédé selon l'une quelconque des revendications précédentes selon lequel lesdites étapes d'identification d'au moins un processus pouvant être démultiplié, d'identification d'au moins une ressource disponible et de démultiplication sont effectuées en réponse à une requête.

5. Procédé selon la revendication 4 selon lequel ladite requête est une requête de raffinement de calculs.

6. Programme d'ordinateur comprenant des instructions adaptées à la mise en œuvre de chacune des étapes du procédé selon l'une quelconque des revendications précédentes lorsque ledit programme est exécuté sur un ordinateur.

7. Dispositif comprenant des moyens adaptés à la mise en œuvre de chacune des étapes du procédé selon l'une quelconque des revendications 1 à 5.

## Patentansprüche

1. Verfahren zum dynamischen Zuteilen mindestens einer Ressource einer Ressourceneinheit eines Clusters, wobei die Ressourcen der Ressourceneinheit für die Prozessausführung einer Anwendung reserviert sind, und die Ressourcen Knoten des Clusters sind, wobei dieses Verfahren **dadurch gekennzeichnet ist, dass** es die folgenden Schritte umfasst:
- Schaffen (305) mindestens einer virtuellen Maschine in mindestens einer Ressource der Ressourceneinheit in Folge der Reservierung der Ressourcen der Ressourceneinheit, wobei die mindestens eine geschaffene virtuelle Maschine Charakteristika bietet, die denjenigen der mindestens einen Ressource ähnlich sind;
- Schaffen eines Indikators, der mit der mindestens einen Ressource assoziiert ist, für die mindestens eine virtuelle Maschine geschaffen wurde, wobei es der Indikator ermöglicht, anzugeben, dass eine virtuelle Maschine der mindestens einen Ressource verwendet wurde;
- Identifikation mindestens eines Prozesses im Ausführungsverlauf der Anwendung, wobei der mindestens eine Prozess in mindestens einen weiteren Prozess demultipliziert werden kann, wobei eine vorbestimmte Schwelle für den Prozess spezifiziert wird, der demultipliziert werden kann, wobei die Schwelle der Anzahl von Knoten entspricht, die notwendig sind, um den Prozess im Ausführungsverlauf zu demultiplizieren;
- Identifikation unter den reservierten Ressourcen mindestens einer verfügbaren Ressource, die mindestens eine nicht verwendete geschaffene virtuelle Maschine umfasst, wobei die Identifikation auf Grundlage des Indikators erfolgt, der mit jeder der Ressourcen assoziiert ist, für die mindestens eine virtuelle Maschine geschaffen wurde; und
- Demultiplikation (325) des mindestens einen Prozesses, der demultipliziert werden kann;
wobei die Demultiplikation (325) darin besteht, einen Prozess in neue Prozesse zu zerlegen, womit ein oder mehrere neue Prozess/e geschaffen wird bzw. werden, und mindestens einer der neuen Prozesse dazu führt, dass die Demultiplikation durch eine nicht verwendete geschaffene virtuelle Maschine der mindestens einen identifizierten Ressource durchgeführt wird,
wobei der Identifikationsschritt mindestens einen Prozesses, der demultipliziert werden kann, die folgenden Schritte umfasst:
- einen Schritt des Berechnens (315) einer Anzahl verfügbarer Ressourcen unter den reservierten Ressourcen, die mindestens eine nicht verwendete virtuelle Maschine haben, und
- einen Schritt des Vergleichens (320) der Anzahl von Ressourcen mit der spezifizierten vorbestimmten Schwelle für den mindestens einen Prozess, der demultipliziert werden kann, wobei der Demultiplikationsschritt im Ansprechen auf den Vergleich erfolgt,
wobei das Verfahren darüber hinaus einen Schritt der Aktualisierung (325) des Indikators umfasst, der mit der mindestens einen Ressource assoziiert ist, die dafür identifiziert ist, anzugeben, dass eine virtuelle Maschine der mindestens einen identifizierten Ressource dazu verwendet wird, einen der neuen Prozesse auszuführen, der sich aus der Demultiplikation des identifizierten Prozesses ergibt.

2. Verfahren nach Anspruch 1, gemäß dem die Anzahl an verfügbaren Ressourcen in Abhängigkeit von dem Indikator und der Anzahl an virtuellen Maschinen bestimmt wird, die in der mindestens einen identifizierten Ressource geschaffen sind.

3. Verfahren nach einem der vorhergehenden Ansprüche, gemäß dem das Verfahren in einem übergeordneten Prozess der Anwendung umgesetzt wird.

4. Verfahren nach einem der vorhergehenden Ansprüche, gemäß dem die Schritte zur Identifikation mindestens eines Prozesses, der demultipliziert werden kann, zur Identifikation mindestens einer verfügbaren Ressource und zur Demultiplikation im Ansprechen auf eine Anfrage erfolgen.

5. Verfahren nach Anspruch 4, gemäß dem die Anfrage eine Anfrage zur Verfeinerung von Berechnungen ist.

6. Rechnerprogramm, das Anweisungen umfasst, die zum Umsetzen jedes der Schritte des Verfahrens nach einem der vorhergehenden Ansprüche angepasst ist, wenn das Programm auf einem Rechner ausgeführt wird.

7. Vorrichtung, die Einrichtungen umfasst, die zur Umsetzung jedes der Schritte des Verfahrens nach einem der Ansprüche 1 bis 5 angepasst ist.

## Claims

1. A method for dynamically allocating at least one resource of a set of resources of a cluster, the resources of said set of resources being reserved for the execution of processes of an application and said resources are nodes of said cluster, the method being **characterized in that** it comprises the following steps,
- creating (305) at least one virtual machine in at least one resource of said set of resources further to the reservation of the resources of said set of resources, said at least one created virtual machine providing similar features to those of said at least one resource;
- creating an indicator associated with said at least one resource for which at least one virtual machine has been created, said indicator making it possible to indicate that a virtual machine of said at least one resource has been used;
- identifying at least one process in course of execution of said application, said at least one process being divisible into at least one other process, a predetermined threshold being specified for said divisible process , said threshold corresponding to the number of nodes required to divide the process in course of execution;
- identifying among said reserved resources at least one available resource comprising at least one unused created virtual machine, said identifying being carried out on the basis of said indicator associated with each of said resources for which at least one virtual machine has been created; and,
- dividing (325) said at least one divisible process;
in which said dividing (325) consists of decomposing a process into new processes, thereby creating one or more new processes, and at least one of the new processes resulting from said dividing being executed by an unused created virtual machine of said at least one identified resource,
the step of identifying at least one divisible process comprising the following steps:
- a step of computing (315) a number of resources available from among said reserved resources having at least one unused virtual machine, and
- a step of comparing (320) said number of resources with the specified predetermined threshold for said at least one divisible process, said dividing step being carried out in response to said comparing,
the method further comprising a step of updating (325) the indicator associated with said at least one identified resource to indicate that a virtual machine of said at least one identified resource is used to execute one of the new processes resulting from said dividing of said identified process.

2. A method according to claim 1, in which said number of available resources is determined according to said indicator and the number of virtual machines created in said at least one identified resource.

3. A method according to any one of the preceding claims in which said method is implemented in a master process of said application.

4. A method according to any one of the preceding claims in which said steps of identifying at least one divisible process, of identifying at least one available resource and of dividing are carried out in response to a request.

5. A method according to claim 4, in which said request is a request for calculation refinement.

6. A computer program comprising instructions adapted for the carrying out of each of the steps of the method according to any one of the preceding claims when said program is executed on a computer.

7. A device comprising means adapted for the implementation of each of the steps of the method according to any one of claims 1 to 5.
